# FASCICULE DE BREVET EUROPEEN

(11) **EP 3 302 182 B1**
(45) Date de publication et mention de la délivrance du brevet: **03.04.2019**
(21) Numéro de dépôt: 16736903.2
(22) Date de dépôt: 03.06.2016
(51) Int. Cl.: A47J 27/08, A47J 27/09, A47J 27/092, F16K 15/06

(54) **SOUPAPE POUR APPAREIL DE CUISSON SOUS PRESSION ET APPAREIL DE CUISSON SOUS PRESSION EQUIPÉ D'UNE TELLE SOUPAPE**
VENTIL FÜR EIN UNTER DRUCK STEHENDES KOCHGERÄT UND UNTER DRUCK STEHENDES KOCHGERÄT MIT SOLCH EINEM VENTIL
VALVE FOR A PRESSURIZED COOKING APPLIANCE, AND PRESSURIZED COOKING APPLIANCE PROVIDED WITH SUCH A VALVE

(30) Priorité: 04.06.2015 FR 1555111; 04.06.2015 FR 1555110
(43) Date de publication de la demande: 11.04.2018
(73) Titulaire: SEB S.A., 69130 Ecully (FR)
(72) Inventeur: RHETAT, Eric, 21000 Dijon (FR); BARAILLE, Eric, Laurent, 21121 Fontaine Les Dijon (FR)
(74) Mandataire: Weber, Jean-François
(86) Numéro de dépôt international: PCT/FR2016/051339
(87) Numéro de publication internationale: WO 2016/193643

(56) Documents cités:
- EP-A1- 1 008 320
- EP-A1- 1 698 814
- EP-A1- 2 113 695
- CN-U- 201 668 281

## Description

### DOMAINE TECHNIQUE

La présente invention se rapporte au domaine technique général des appareils de cuisson d'aliments sous pression, en particulier de nature domestique, destinés à assurer la cuisson sous pression de vapeur des aliments contenus en leur sein, et se rapporte plus particulièrement aux soupapes de régulation de pression équipant ces appareils.

La présente invention concerne plus précisément une soupape de régulation de pression destinée à équiper un appareil de cuisson d'aliments sous pression de vapeur, ladite soupape comprenant :
- un corps inférieur pourvu d'un siège destiné à mettre en communication l'intérieur de l'appareil avec l'extérieur,
- un obturateur mobile en translation selon une direction axiale et coopérant avec le siège, sous l'influence conjointe d'un premier organe de rappel et du niveau de pression régnant dans l'enceinte, pour maintenir ce dernier à un niveau de consigne,
- un corps supérieur qui forme un conduit pour canaliser la vapeur s'échappant par le siège, ledit conduit se terminant par une sortie par laquelle ladite vapeur s'échappe hors de la soupape,
- et un organe de commande de la décompression, conçu pour être déplacé manuellement relativement au corps inférieur pour amener l'obturateur à occuper une position de décompression permettant une fuite de vapeur par le siège.

### TECHNIQUE ANTERIEURE

Il est déjà connu de capter l'augmentation de température résultant du passage de la vapeur à travers un conduit de sortie disposé en aval de la soupape de régulation de pression équipant un autocuiseur, au moyen d'un capteur de température disposé au voisinage de la sortie dudit conduit. On connaît en particulier un autocuiseur équipé d'un module de commande qui est monté sur le couvercle et incorpore différents organes de commande (du verrouillage/déverrouillage, de la décompression, du niveau de pression de fonctionnement...), de régulation et de sécurité. Le module en question incorpore en particulier une soupape de régulation de pression qui est intégrée au sein dudit module, en étant montée de façon excentrée dans une chambre destinée à coiffer de façon étanche un orifice pratiqué à travers le couvercle. La soupape comprend un obturateur qui est soumis à une force de rappel élastique pour obturer ou dégager l'orifice en fonction du niveau de pression au sein de l'autocuiseur. La chambre communique en amont avec l'orifice (lequel coopère avec l'obturateur) et en aval avec un conduit d'échappement déporté latéralement, pour évacuer la vapeur vers l'extérieur.

Le capteur de température inclut une sonde qui est, selon le modèle d'autocuiseur concerné, soit implantée contre la face externe du conduit d'échappement précité, soit montée à la sortie dudit conduit pour être directement immergée dans le flux de vapeur s'échappant par le conduit d'échappement. Afin de garantir une précision de mesure suffisante et donc le bon fonctionnement de l'appareil, il est important que la position relative de la sonde et du conduit d'échappement de vapeur soit parfaitement déterminée et maîtrisée. À cette fin, la mise en oeuvre d'une conception modulaire, selon laquelle la sonde et le conduit sont incorporés au sein d'un même sous-ensemble, s'avère particulièrement avantageuse, puisqu'elle permet d'éviter toute erreur de mesure qui serait due à une variation de positionnement de la sonde relativement au conduit d'échappement de vapeur.

De tels appareils connus donnent donc globalement satisfaction, mais n'en présentent pas moins certains inconvénients, liés en particulier à la mise en oeuvre d'un module incorporant la soupape. En effet, la mise en oeuvre d'un module dans les appareils de l'art antérieur implique que le conduit d'échappement de vapeur évoqué précédemment est décalé latéralement relativement à la soupape elle-même. Or, il est indispensable de permettre à l'utilisateur de vérifier que le conduit n'est pas obstrué, pour des raisons évidentes de sécurité d'utilisation. Par conséquent, ces appareils connus mettent en oeuvre un montage amovible du module sur le couvercle, afin de permettre à un utilisateur de détacher le module du couvercle à des fins d'inspection et de nettoyage. Toutefois, la conception et la construction de ces appareils de cuisson connus à module sont telles que l'opération de détachement du module s'avère en pratique relativement malaisée et fastidieuse. En définitive, si ces autocuiseurs connus sont globalement satisfaisants, notamment en matière de précision de la mesure de température, ils présentent en revanche des déficiences en ce qui concerne l'ergonomie et la facilité d'utilisation. En outre, cette conception modulaire connue s'avère être relativement coûteuse et n'autorise que peu de flexibilité industrielle.

Enfin, une telle conception modulaire n'est pas forcément la mieux adaptée pour certains types d'autocuiseurs, et en particulier pour les autocuiseurs à baïonnette reposant sur la mise en oeuvre de rampes de cuve et de couvercle destinées à coopérer par rotation du couvercle relativement à la cuve. Pour de tels autocuiseurs, et en particulier pour les modèles les moins sophistiqués, il est généralement préféré de recourir à une conception extrêmement simple mettant en oeuvre une soupape indépendante. Ces soupapes indépendantes connues sont toutefois difficilement compatibles, sinon totalement incompatibles, avec une prise de mesure précise de température de vapeur. Le document EP1698814 A1 décrit également une soupape de régulation de pression.

### EXPOSE DE L'INVENTION

Les objets assignés à l'invention visent en conséquence à porter remède aux différents inconvénients énumérés précédemment et à proposer une nouvelle soupape de régulation pour appareil de cuisson sous pression qui, tout formant une unité indépendante, est de conception très simple, sûre et fiable, et convient particulièrement pour être associée à un dispositif de détection du début de la phase de cuisson à pression de fonctionnement.

Un autre objet de l'invention vise à proposer une nouvelle soupape de régulation de pression de construction compacte et bon marché.

Un autre objet de l'invention vise à proposer une nouvelle soupape de régulation de pression au fonctionnement particulièrement précis et stable.

Un autre objet de l'invention vise à proposer une nouvelle soupape de régulation de pression simple, confortable et rassurante à utiliser.

Un autre objet de l'invention vise à proposer une nouvelle soupape de régulation de pression qui est particulièrement adaptée pour être utilisée avec un dispositif de détection du début de la phase de cuisson sous pression régulée basée sur une détection de la température du flux de vapeur issu la soupape.

Un autre objet de l'invention vise à proposer une nouvelle soupape de régulation de pression qui est particulièrement facile et pratique à nettoyer.

Un autre objet de l'invention vise à proposer une nouvelle soupape de régulation de pression compatible avec tout type d'appareil de cuisson sous pression, que ce dernier soit ou non équipé d'une sonde de détection de température.

Un autre objet de l'invention vise à proposer un nouvel appareil de cuisson sous pression équipé d'une soupape de régulation de pression répondant aux différentes exigences exposées ci-avant.

Les objets assignés à l'invention sont atteints à l'aide d'une soupape de régulation de pression destinée à équiper un appareil de cuisson d'aliments sous pression de vapeur, ladite soupape comprenant :
- un corps inférieur pourvu d'un siège destiné à mettre en communication l'intérieur de l'appareil avec l'extérieur,
- un obturateur mobile en translation selon une direction axiale et coopérant avec le siège, sous l'influence conjointe d'un premier organe de rappel et du niveau de pression régnant dans l'enceinte, pour maintenir ce dernier à un niveau de consigne,
- un corps supérieur qui forme un conduit pour canaliser la vapeur s'échappant par le siège, ledit conduit se terminant par une sortie par laquelle ladite vapeur s'échappe hors de la soupape,
- et un organe de commande de la décompression, conçu pour être déplacé manuellement relativement au corps inférieur pour amener l'obturateur à occuper une position de décompression permettant une fuite de vapeur par le siège,
ladite soupape étant caractérisée en ce qu'elle comprend un premier mécanisme de transformation conçu pour transformer le déplacement de l'organe de commande relativement au corps inférieur en rotation du corps supérieur relativement au corps inférieur, et un deuxième mécanisme de transformation conçu pour transformer la rotation du corps supérieur en déplacement de l'obturateur relativement au corps inférieur, lesdits premier et deuxième mécanismes de transformation étant conçus pour maintenir ladite sortie à distance constante du corps inférieur selon la direction axiale.

Les objets assignés à l'invention sont également atteints à l'aide d'un appareil de cuisson d'aliments sous pression de vapeur équipé d'une telle soupape.

### DESCRIPTIF SOMMAIRE DES DESSINS

D'autres particularités et avantages de l'invention apparaîtront et ressortiront plus en détail à la lecture de la description faite ci-après, en référence aux dessins annexés, donnés à titre purement illustratifs et non limitatifs, dans lesquels :

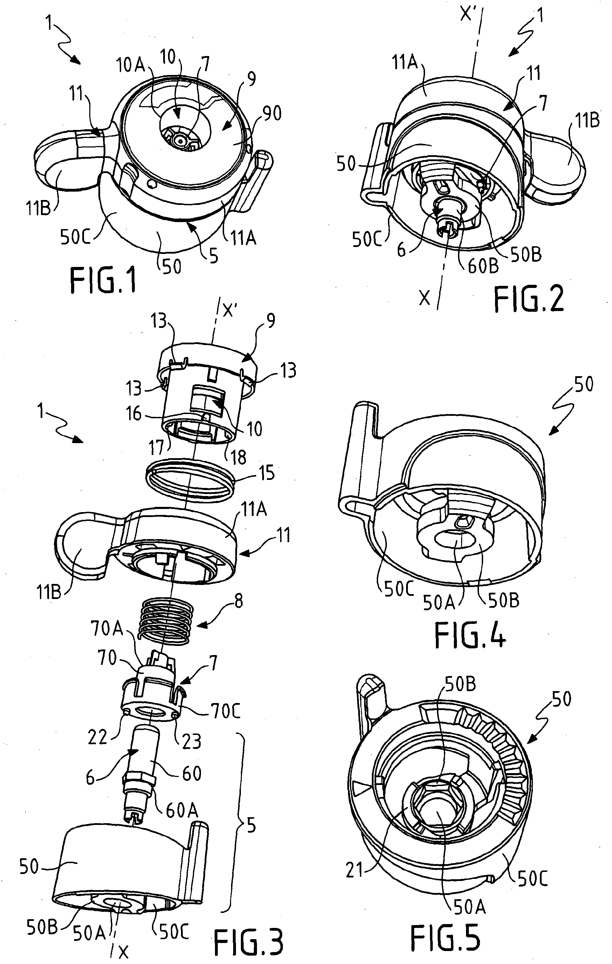

- La figure 1 illustre, selon une vue schématique en perspective de dessus, une soupape de régulation de pression conforme à l'invention, qui se trouve dans un état fonctionnel de régulation.
- La figure 2 illustre, selon une vue schématique en perspective de dessous, la soupape de la figure 1.
- La figure 3 est une vue éclatée de la soupape des figures 1 et 2.
- Les figures 4 et 5 illustrent, selon des vues schématiques en perspective respectivement de dessous et de dessus, une pièce en matière plastique contribuant à former le corps inférieur de la soupape de régulation des figures 1 à 3.
- Les figures 6 et 7 illustrent, selon des vues schématiques en perspective, une pièce en matière plastique formant en particulier l'obturateur de la soupape des figures 1 à 5.
- La figure 8 illustre, selon une vue en perspective de dessus, une pièce en matière plastique formant l'organe de commande de la décompression de la soupape des figures 1 à 7.
- La figure 9 illustre, selon une vue en perspective de dessous, une pièce en matière plastique formant le corps supérieur de la soupape des figures 1 à 8.
- Les figures 10 et 11 illustrent, selon des vues schématiques en perspective, respectivement un sous-ensemble unitaire inférieur et un sous-ensemble unitaire supérieur destinés à être assemblés pour former la soupape de régulation des figures 1 à 9.
- La figure 12 illustre, selon une vue en coupe, la soupape des figures 1 à 10 dans un état de régulation.
- La figure 13 illustre, selon une vue en coupe, la soupape des figures 1 à 12 dans un état de décompression.
- La figure 14 illustre, selon une vue schématique en perspective, un appareil de cuisson d'aliments sous pression équipé de la soupape des figures 1 à 13.
- La figure 15 illustre, selon une vue en perspective, un module indépendant amovible destiné à équiper l'appareil de cuisson de la figure 14 et qui embarque un minuteur ainsi qu'un capteur de température capable, lorsque le couvercle de l'appareil de la figure 14 est verrouillé relativement à la cuve, de déterminer la température d'un flux de vapeur issu de la soupape de régulation de pression montée sur le couvercle.
- La figure 16 illustre, selon une vue de dessus, l'appareil de la figure 14 équipé cette fois du module de la figure 15, ledit appareil de cuisson se trouvant dans une configuration de déverrouillage.
- La figure 17 illustre, selon une vue de dessus, l'appareil de la figure 16 qui se trouve cette fois en configuration de verrouillage du couvercle relativement à la cuve.

### MEILLEURE MANIERE DE REALISER L'INVENTION

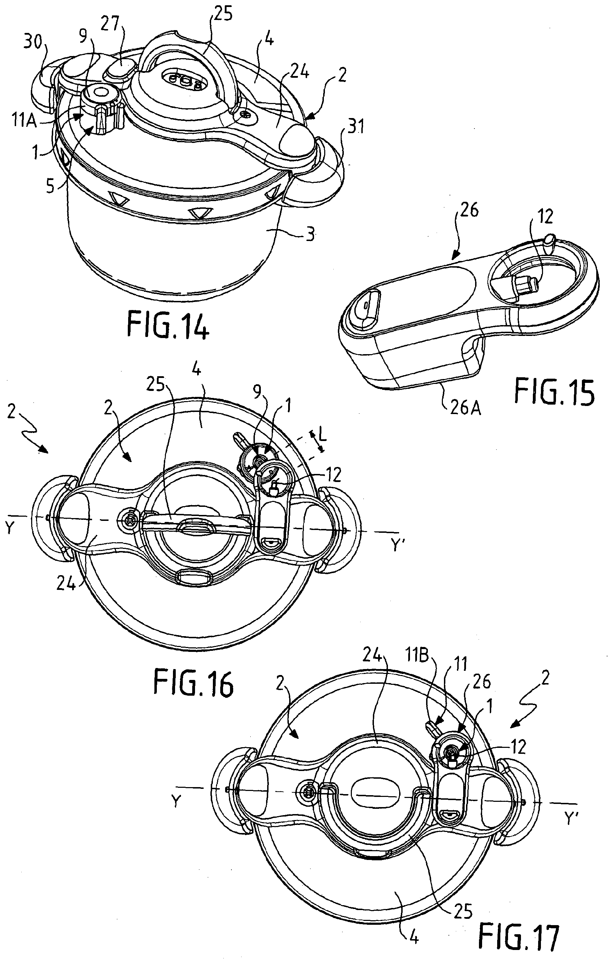

L'invention concerne une soupape 1 de régulation de pression destinée à équiper un appareil 2 de cuisson d'aliments sous pression de vapeur, c'est-à-dire un appareil conçu pour cuire des aliments en présence de vapeur, ladite vapeur étant générée par le chauffage, au sein de l'appareil 2 et en présence des aliments, d'un liquide de cuisson, par exemple un liquide aqueux. Ledit appareil 2 de cuisson sous pression comporte, de manière connue en soi, une cuve 3 et un couvercle 4 destiné à être rapporté de manière sensiblement étanche sur la cuve 3 pour former une enceinte de cuisson capable de monter en pression lorsqu'elle est soumise à l'influence d'une source de chauffe (embarquée ou externe), jusqu'à un niveau de pression prédéterminée dit « *pression de fonctionnement* » auquel la pression est maintenue grâce à ladite soupape 1 de régulation de pression. La soupape 1 de régulation de pression est donc conçue pour maintenir la pression régnant dans l'enceinte de cuisson à un niveau prédéterminé de consigne sensiblement constant qui excède par exemple la pression atmosphérique d'une valeur qui est comprise avantageusement entre sensiblement 10 et 120 KPa, et qui de préférence est de l'ordre de 100 KPa. La soupape 1 de régulation de pression est de préférence montée en correspondance avec un orifice ménagé à travers l'enveloppe de l'enceinte de cuisson, par exemple à travers le couvercle 4, de façon à être en communication étanche avec l'intérieur de l'appareil 2, pour être sensible au, et réguler le, niveau de pression régnant au sein de l'enceinte de cuisson formée par la cuve 3 et le couvercle 4. Comme illustré aux figures 14, 16 et 17, la soupape 1 de régulation de pression est destinée à être avantageusement portée, de préférence directement, par le couvercle 4.

Comme illustré aux figures, la soupape 1 comprend un corps inférieur 5 pourvu d'un siège 6, ledit siège 6 étant destiné à mettre en communication l'intérieur de l'appareil 2 avec l'extérieur. Dans le mode de réalisation illustré aux figures, le corps inférieur 5 comprend avantageusement un élément tubulaire 60 formant le siège 6 ainsi qu'un bâti 50 attaché audit élément tubulaire 60 et entourant au moins localement ledit élément tubulaire 60. En d'autres termes, dans ce mode de réalisation préférentiel, le corps inférieur 5 est formé par l'assemblage de deux pièces distinctes, savoir l'élément tubulaire 60 formant le siège 6 et le bâti 50 qui forme la jupe entourant localement le siège 6, comme illustré aux figures. Il est cependant tout à fait envisageable, sans pour autant que l'on sorte du cadre de l'invention, que le corps inférieur 5 soit formé d'une pièce unique monobloc qui forme à la fois le bâti 50 et le siège 6.

Dans l'exemple illustré aux figures, le siège 60 est formé par un tube métallique tandis que le bâti 50 est formé par une pièce en matière plastique pourvue d'un puits central 50A au sein duquel est enfilé l'élément tubulaire 60. Le puits central 50A est délimité par une bague 50B qui est elle-même attachée à, et entourée par, une paroi latérale annulaire 50C formant la jupe précitée. L'élément tubulaire 60 comprend de préférence un épaulement 60A destiné à venir en appui contre une face conjuguée de la bague 50B, de sorte qu'une partie supérieure de l'élément tubulaire 60 fait saillie vers le haut et vers l'intérieur de la soupape 1, tandis qu'une partie inférieure 60B fait saillie vers le bas et vers l'extérieur de la soupape 1 et est destiné à traverser l'orifice ménagé à travers le couvercle 4 pour assurer, via le siège 6, la mise en communication de l'intérieur de l'enceinte de cuisson avec l'extérieur. La portion inférieure 60B de l'élément tubulaire 60 qui fait saillie vers le bas du puits 50A est préférentiellement filetée, de façon à pouvoir assurer la fixation du corps inférieur 5, formée par l'assemblage de l'élément tubulaire 60 et du bâti 50, au couvercle 4, par vissage d'un écrou sur la portion filetée 60B en question. Le sous-ensemble inférieur 500 formé ainsi par l'association du bâti 50 et de l'élément tubulaire 60 est destiné à être attaché à demeure (mais de préférence de façon démontable) au couvercle 4 de l'appareil 2 de cuisson d'aliments sous pression que la soupape 1 est destinée à équiper. Le corps inférieur 5 est ainsi conçu pour être immobilisé relativement au couvercle 4.

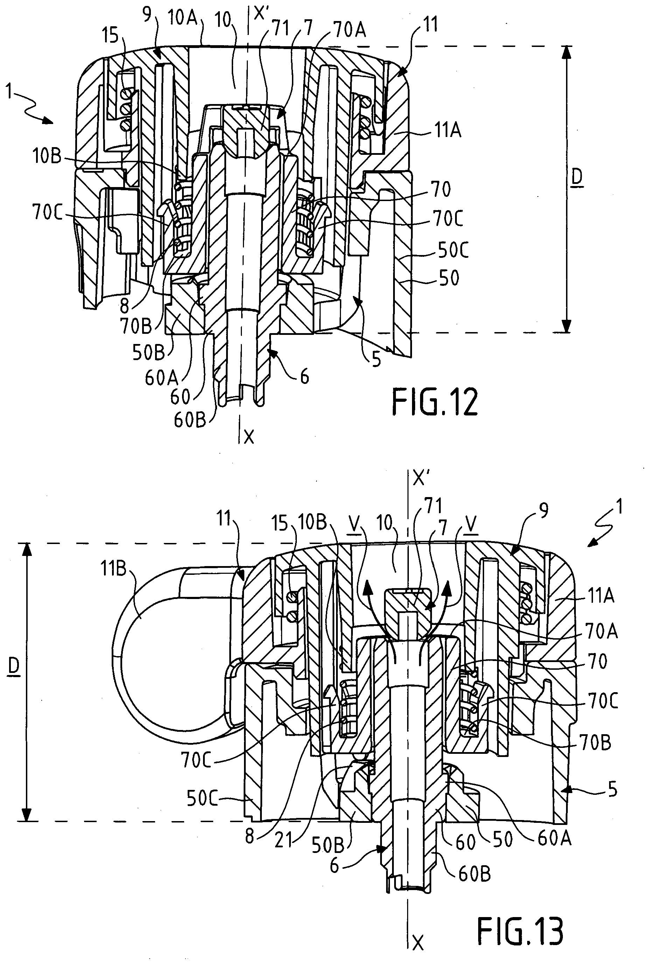

La soupape 1 comprend également un obturateur 7 mobile en translation selon une direction axiale X-X' et coopérant avec le siège 6, sous l'influence conjointe d'un premier organe de rappel 8 et du niveau de pression régnant dans l'appareil 2, pour maintenir ledit niveau de pression au sein de l'appareil 2 à un niveau de consigne, correspondant à la pression de fonctionnement. Comme cela ressort notamment de la figure 12, l'obturateur 7 est pressé par le premier organe de rappel 8 contre le siège 6, c'est-à-dire en l'espèce contre le bord supérieur de l'élément tubulaire 60, pour obturer hermétiquement ledit siège 6 afin d'empêcher toute fuite de vapeur de l'intérieur de l'appareil 2 vers l'extérieur par le siège 6. En revanche, dès que le niveau de pression régnant dans l'appareil 2 de cuisson sous pression excède un niveau prédéterminé correspondant à la pression de fonctionnement, la pression va exercer sur l'obturateur 7 une force motrice opposée à la force de rappel exercé par le premier organe de rappel 8, qui va entraîner le soulèvement de l'obturateur 7 jusqu'à ce que l'étanchéité entre l'obturateur 7 et le siège 6 soit rompue, autorisant ainsi une fuite de vapeur qui fait chuter la pression et entraîne donc le retour consécutif de l'obturateur 7 dans sa position de rappel dans laquelle il obture le siège 6. Un tel agencement permet ainsi de réguler le niveau de pression au sein de l'appareil 2, en le maintenant sensiblement constant et égal à un niveau de consigne correspondant à la force de rappel exercée par le premier organe de rappel 8. Ainsi, l'obturateur 7 est monté mobile en translation selon la direction axiale X-X' entre d'une part au moins une position de fuite, dans laquelle il est repoussé à distance du siège 6, sous l'effet de la pression régnant dans l'appareil 2 pour autoriser un échappement de vapeur par le siège 6, et d'autre part une position d'obturation du siège 6 (illustrée à la figure 12) dans laquelle il est rappelé tant que la pression dans l'appareil 2 n'excède pas le niveau prédéterminé de consignes (la *« pression de fonctionnement* »). De préférence, comme illustré aux figures, le premier organe de rappel 8 comprend un corps élastique, comme par exemple un ressort de compression. Il est cependant tout à fait envisageable, sans pour autant que l'on sorte du cadre de l'invention, que le premier organe de rappel 8 ne soit pas constitué par un corps élastique mais plutôt par un élément massique dont le propre poids exerce un effort de rappel sur l'obturateur 7. L'invention n'est donc pas limitée un mécanisme de régulation particulier, et tout type d'obturateur 7 sensible au niveau de pression régnant au sein de l'appareil 2 pourra être mis en oeuvre dans le cadre de l'invention.

Comme illustré aux figures, la soupape 1 comprend également un corps supérieur 9 qui forme un conduit 10 pour canaliser la vapeur V s'échappant par le siège 6 en provenance de l'intérieur de l'appareil 2. Le corps supérieur 9 est donc conformé pour canaliser lui-même, à l'aval du siège 6, la vapeur V s'échappant hors de ce dernier, lorsque l'obturateur mobile 7 autorise bien entendu une telle fuite de vapeur par le siège 6. Le conduit 10 se termine, comme illustré aux figures, par une sortie 10A par laquelle ladite vapeur V s'échappe hors de la soupape 1. La sortie 10A forme ainsi l'interface entre l'intérieur de la soupape 1 et l'environnement extérieur, c'est-à-dire que la vapeur V pénètre dans la soupape 1 par l'extrémité inférieure du siège 6 puis chemine à l'intérieur de la soupape 1, en passant tout d'abord par le siège 6 puis en circulant dans le conduit 10, pour enfin sortir hors de la soupape 1 une fois franchie la sortie 10A. Le conduit 10 permet ainsi d'impartir à la vapeur V s'échappant hors du siège 6 une trajectoire prédéterminée, qui est par exemple (comme dans le mode de réalisation illustré aux figures) une trajectoire sensiblement ascendante, du bas vers le haut, et de préférence une trajectoire sensiblement verticale parallèle à la direction axiale X-X'. Dans le mode de réalisation illustré aux figures, afin de canaliser la vapeur V selon une trajectoire verticale prédéterminée, le conduit 10 présente sensiblement une section circulaire et s'élève entre une entrée 10B et la sortie 10A, sous la forme d'un organe tubulaire dont les extrémités correspondent auxdites entrée 10B et sortie 10A. Le corps supérieur 9 permet ainsi de diriger la vapeur V s'échappant hors de la soupape 1 selon une trajectoire spécifique, de sorte qu'il est possible d'exploiter dans les meilleures conditions possibles l'information (température) associée à ce jet de vapeur. De préférence, le tube qui forme avantageusement le conduit 10 est coaxial au siège 6. Il est cependant parfaitement envisageable que le conduit 10 canalise la vapeur V s'échappant par le siège 6 selon une direction autre que la direction axiale X-X', et par exemple selon une direction horizontale sensiblement perpendiculaire à la direction axiale X-X', sans pour autant que l'on sorte du cadre de l'invention. Le recours à un conduit de canalisation selon la direction axiale X-X' est cependant préféré, car il permet de préserver la vitesse du flux de vapeur, en évitant les pertes de charges, ce qui est de nature à favoriser des mesures de température pratiquées dans le flux de vapeur en question, au-dessus et au droit de la soupape 1.

Avantageusement, l'obturateur 7 comprend un manchon 70 enfilé au moins en partie sur ledit siège 6 de façon à pouvoir coulisser le long du siège 6, en l'espèce selon la direction axiale X-X', ledit manchon 70 portant un clapet 71 destinée à coopérer avec le siège 6 pour contrôler l'ouverture/fermeture de ce dernier. Le manchon 70 présente ainsi une forme tubulaire et porte à son extrémité supérieure, par l'intermédiaire de pattes (en l'espèce au nombre de trois), un pointeau qui forme le clapet 71 et qui est destiné à venir reposer sur et contre le siège 6 pour obturer ce dernier (cf. figure 12). Le manchon 70 est ainsi enfilé sur le siège 6 de façon que le clapet 71 coiffe ledit siège 6. Comme illustré aux figures, le corps élastique qui forme avantageusement l'organe de rappel 8 est de préférence interposé entre l'obturateur 7 et le corps supérieur 9, de façon à exercer sur l'obturateur 7 une force de rappel maintenant l'obturateur 7 dans une position basse d'obturation du siège 6. De préférence, le corps élastique en question comprend un ressort de compression disposé coaxialement audit siège 6. Par exemple, comme illustré, le ressort de compression est enfilé sur le manchon 70, ce dernier s'étendant longitudinalement entre l'extrémité supérieure 70A qui porte le clapet 71 et une extrémité inférieure 70B conformée pour servir de butée pour le ressort de compression.

L'extrémité inférieure 70B est pourvue à cet effet avantageusement d'une collerette contre et sur laquelle le ressort de compression peut venir prendre appui, cette collerette étant avantageusement terminée par un bord vertical 70C qui permet de maintenir en place le ressort de compression, l'espace interstitiel entre le manchon 70 et le rebord vertical 70C formant un logement d'accueil pour le ressort de compression.

La soupape selon l'invention comprend également un organe 11 de commande de la décompression, conçu pour être déplacé manuellement relativement au corps inférieur 5 pour amener l'obturateur 7 à occuper une position de décompression (illustrée à la figure 13) permettant une fuite de vapeur par le siège 6. L'organe de commande 11 est donc conçu pour permettre à l'utilisateur de forcer manuellement la soupape 1 dans un état de fuite, et ce indépendamment du niveau de pression régnant au sein de l'appareil 2, de façon que l'utilisateur de l'appareil 2 en question puisse à tout moment dépressuriser l'appareil 1 en actionnant l'organe de commande 11. La soupape 1 assure ainsi une double fonction, savoir une fonction de régulation de pression d'une part, et une fonction de décompression sur commande d'autre part, chacune desdites fonctions correspondant à un état de fonctionnement spécifique de la soupape 1 commandé par manipulation de l'organe de commande 11.

Conformément à l'invention, la soupape 1 comprend par ailleurs des premier et deuxième mécanismes de transformation conçus pour transformer respectivement le déplacement de l'organe de commande 11 relativement au corps inférieur 5 en rotation du corps supérieur 9 relativement au corps inférieur 5, et la rotation du corps supérieur 9 en déplacement de l'obturateur 7 relativement au corps inférieur 5, tout en maintenant ladite sortie 10A à distance D constante du corps inférieur 5 selon la direction axiale X-X'.

En d'autres termes, le premier mécanisme de transformation est conçu pour transformer le déplacement de l'organe de commande 11 relativement au corps inférieur 5 en rotation du corps supérieur 9 relativement au corps inférieur 5, tandis que le deuxième mécanisme de transformation est conçu pour transformer la rotation du corps supérieur 9 en déplacement de l'obturateur 7 relativement au corps inférieur 5, lesdits premier et deuxième mécanismes de transformation étant conçus pour maintenir ladite sortie 10A à distance constante du corps inférieur 5 selon la direction axiale X-X'.

Le premier mécanisme de transformation consiste ainsi en une liaison mécanique qui convertit le déplacement de l'organe de commande 11, obtenue par manipulation de ce dernier, en un pivotement du corps supérieur 9 relativement au corps inférieur 5. Bien entendu, il existe une multitude de possibilités mécaniques pour réaliser une telle transformation de mouvements, et l'invention n'est pas limitée au mode de réalisation spécifique qui sera décrit plus en détails dans ce qui suit.

Le deuxième mécanisme de transformation permet quant à lui, grâce à une liaison mécanique appropriée entre le corps supérieur 9, l'obturateur 7 et le corps inférieur 5, de convertir la rotation du corps supérieur 9, obtenue grâce au premier mécanisme de transformation, en déplacement de l'obturateur 7 relativement au corps inférieur 5.

Comme évoqué précédemment, les premier et deuxième mécanismes de transformation permettent en outre de maintenir constant l'écartement, mesuré selon la direction axiale X-X' (correspondant en l'espèce à la direction verticale), entre la sortie 10A et le corps inférieur 5, et de préférence également avec le siège 6 dont est pourvu le corps inférieur 5. Cela signifie que l'encombrement hors-tout de la soupape 1, mesuré selon la direction axiale X-X', reste sensiblement constant, quelle que soit la position de l'organe de commande 11 relativement au corps inférieur 5. En d'autres termes, la hauteur de la soupape 1 reste la même, que l'organe de commande 11 soit activé ou non, c'est-à-dire que la soupape 1 soit en état de régulation ou en état de décompression. Grâce à cette caractéristique technique, il est possible de positionner au-dessus, au droit et au plus près de la soupape 1, un capteur de température 12 (cf. figures 14 à 17) sans qu'il n'y ait notamment de risque d'interférence mécanique entre le corps supérieur 9, qui forme avantageusement le sommet de la soupape 1, et le capteur de température 12.

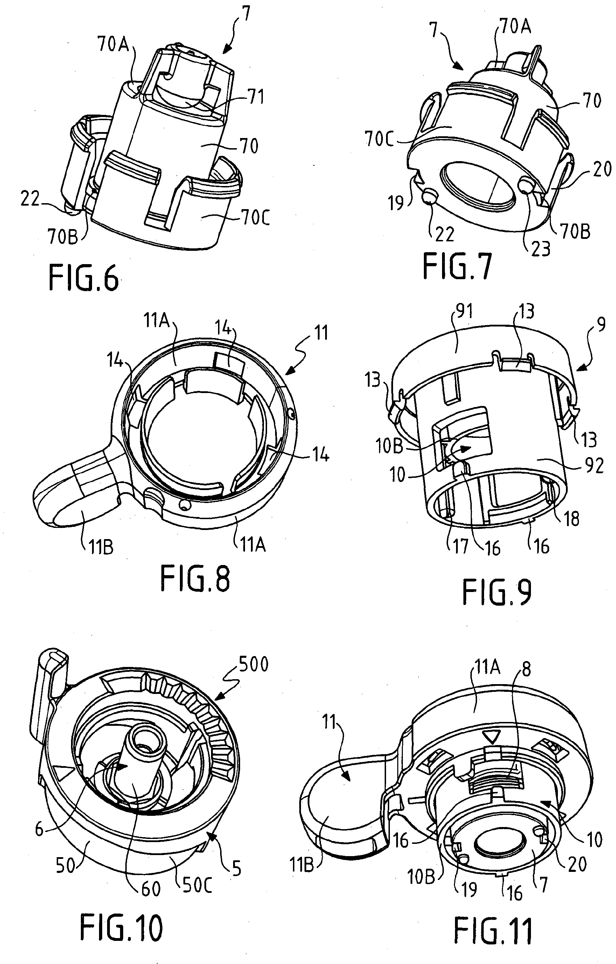

Avantageusement, l'organe de commande 11 assure, outre sa fonction de commande de la décompression, une fonction de commande du placement de la soupape 1 dans une configuration de démontage, qui autorise le désassemblage du sous-ensemble inférieur de la figure 10 et du sous-ensemble supérieur de la figure 11, afin de permettre à l'utilisateur de nettoyer aisément la soupape 1, et en particulier le siège 6 de cette dernière.

Avantageusement, l'organe de commande 11 est monté à rotation relativement audit corps inférieur 5 selon un premier axe de rotation parallèle à ladite direction axiale X-X', et de préférence (comme illustré aux figures) confondu avec ladite direction axiale X-X'. De préférence, le corps supérieur 9 est monté à rotation selon un deuxième axe de rotation parallèle à ladite direction axiale, et de préférence confondu avec cette dernière. Ainsi, dans le mode de réalisation préférentiel illustré aux figures, lesdits premier et deuxième axes de rotation sont confondus. De façon encore plus avantageuse, et conformément là encore au mode de réalisation illustré aux figures, lesdits premier axe, deuxième axe, siège 6 et conduit 10 sont coaxiaux, et en l'espèce coaxiaux à un axe central qui matérialise la direction axiale X-X'.

Avantageusement, l'organe de commande 11 comprend une bague 11A entourant au moins localement le siège 6, ainsi qu'une patte de manipulation 11B qui fait saillie radialement de ladite bague 11A.

La patte de manipulation 11B est ainsi destinée à être saisie entre les doigts de l'utilisateur, par exemple entre le pouce d'une part et l'index d'autre part, afin de pouvoir entraîner en rotation la bague 11A relativement au corps inférieur 5 selon l'axe vertical central de la soupape 1. La bague 11A est quant à elle avantageusement enfilée sur le corps supérieur 9 de façon à entourer localement ce dernier, comme cela ressort des figures. Le premier mécanisme de transformation comprend avantageusement au moins des éléments mâle et femelle issus respectivement de la bague 11A et du corps supérieur 9 ou inversement, lesdits éléments mâle et femelle coopérant pour que la rotation de la bague 11A selon le premier axe de rotation (qui correspond en l'espèce à l'axe vertical central matérialisé par la direction axiale X-X') entraîne la rotation du corps supérieur 9 selon ledit deuxième axe de rotation (qui est en l'espèce confondu avec le premier axe de rotation et l'axe central X-X'). Le premier mécanisme de transformation forme dans ce cas un mécanisme de transmission directe qui permet de transmettre intégralement et directement le mouvement de rotation de l'organe de commande 11 au corps supérieur 9. À cette fin, le corps supérieur 9 comprend avantageusement des ergots 13 formant les éléments mâles du premier mécanisme de transformation, lesdits ergots 13 étant destinés à être reçus dans des fenêtres correspondantes 14 de la bague 11A de façon à permettre un entraînement direct en rotation du corps supérieur 9 par l'organe de commande 11. De préférence, le corps supérieur 9 est par ailleurs soumis à une force de rappel ascendante exercée avantageusement par un deuxième organe de rappel 15, formé de préférence par un ressort de compression interposé entre l'organe de commande 11 (plus précisément la bague 11A) et le corps supérieur 9. Dans ce mode de réalisation préférentiel, le corps supérieur 9 comprend également des butées 16 destinées à retenir le corps supérieur 9 contre le corps inférieur 5 en réaction à la force de rappel ascendante exercée par le ressort de compression 15. Le corps supérieur 9 est ainsi maintenu en permanence en appui ascendant contre le corps inférieur 5 et maintenu à altitude constante par le ressort de rappel 15. Dans ce mode de réalisation préférentiel, la bague 11A et le corps supérieur 9 sont reliés par une liaison glissière, afin de permettre un coulissement relatif de la bague 11A et de l'organe de commande 11 parallèlement à la direction axiale X-X'. À cette fin, chaque fenêtre 14 de la bague 11A est par exemple dimensionnée pour permettre le coulissement des ergots 13 correspondant en leur sein, parallèlement à la direction axiale X-X'. Dans ce mode de réalisation préférentiel, le corps supérieur 9 est maintenu en permanence par le ressort de compression 15 à une altitude qui ne varie pas avec la position de l'organe de commande 11, de sorte que la hauteur (matérialisée par la distance D) de la soupape 1 reste constante quelle que soit la position de l'organe de commande 11 relativement au corps inférieur 5.

Un tel agencement assure une excellente stabilité de la soupape 11, et un confort d'utilisation remarquable. Il est cependant tout à fait envisageable, sans pour autant que l'on sorte du cadre de l'invention, qu'en lieu et place d'un corps supérieur 9 distinct de l'organe de commande 11, une pièce unique formant à la fois le corps supérieur 9 et l'organe de commande 11 soit mise en oeuvre.

Avantageusement, et comme illustré aux figures, le corps supérieur 9 comprend une face supérieure 90 en forme de couronne prolongée à sa périphérie par un bord tombant 91 qui porte les ergots 13. Le corps supérieur 9 comprend également dans ce mode de réalisation préférentiel un premier tube qui forme le conduit 10 et qui est entouré par un deuxième tube 92 coaxial qui s'étend plus bas que le bord tombant 91 et que le conduit 10 et qui porte les butées 16 à son extrémité inférieure. Le conduit 10 débouche, par sa sortie 10A, au centre de ladite face supérieure 90 en forme de couronne.

Avantageusement, le deuxième mécanisme de transformation comprend une liaison glissière entre le corps supérieur 9 et l'obturateur 7, de façon à permettre l'entraînement en rotation de l'obturateur 7 par le corps supérieur 9 tout en autorisant le coulissement de l'obturateur 7 relativement au corps supérieur 9. À cette fin, la liaison glissière en question est formée par exemple par l'association d'un doigt 17 (et en l'espèce de deux doigts 17, 18) solidaires du corps supérieur 9 et de cavité(s) allongée(s) 19, 20 verticale(s) conjuguée(s), de type encoches, ménagées sur la paroi latérale de l'obturateur 7 et au sein desquelles coulissent lesdits doigts 17, 18, ce qui permet à l'obturateur 7 de coulisser relativement au corps 9 tout en pouvant être entraîné en rotation par le corps 9 selon l'axe central matérialisé par la direction axiale X-X'.

De préférence, le deuxième mécanisme de transformation comprend également d'une part une came 21 solidaire du corps inférieur 5, et en l'espèce de la bague 50B, et d'autre part un suiveur de came 22 (et en l'espèce deux suiveurs de came 22, 23) solidaire(s) de l'obturateur 7 et coopérant avec la came 21 pour transformer la rotation de l'obturateur 7 relativement au corps inférieur 5 en coulissement de l'obturateur 7 selon la direction axiale X-X' relativement au corps inférieur 5. La came 21 est de préférence formée par des rampes tandis que chaque suiveur de came 22, 23 est par exemple formé par un plot qui s'étend sur la face inférieure de la collerette 70B contre laquelle vient en appui le ressort de compression 8. Ainsi, la rotation de l'organe de commande 11 entraîne celle du corps supérieur 9 relativement au corps inférieur 5, rotation du corps supérieur 9 qui entraîne elle-même la rotation de l'obturateur 7, rotation qui est transformée grâce à la coopération de l'obturateur 7 avec la came portée par le corps inférieur 5 en coulissement de l'obturateur 7 relativement au corps inférieur 5 selon la direction axiale X-X'.

L'invention concerne enfin un appareil 2 de cuisson d'aliments sous pression de vapeur équipée de la soupape 1 conforme à l'invention. La soupape 1 est compatible avec tous les types d'appareils de cuisson d'aliments sous pression. Dans l'exemple illustré aux figure, l'appareil 2 est un autocuiseur à baïonnette, pourvue d'un système de verrouillage conçu pour assurer le verrouillage/ déverrouillage du couvercle 4 relativement à la cuve 3 par pivotement du couvercle 4 relativement à la cuve 3, afin de mettre en correspondance des rampes de cuve et de couvercle. L'invention n'est cependant pas limité à la mise en oeuvre d'un système de verrouillage à baïonnette, et il est par exemple tout à fait envisageable, de façon alternative, de recourir à un système de verrouillage à étriers, segments, ou mâchoires... sans pour autant que l'on sorte du cadre de l'invention. De préférence, l'appareil 2 comprend un sous-ensemble de couvercle qui inclut à la fois au moins le couvercle 4 et un support 24 attaché audit couvercle 4, de façon que ce dernier puisse pivoter relativement audit support 24 entre deux positions correspondant respectivement à une configuration de déverrouillage (figure 16) et une configuration de verrouillage (figure 17). De préférence, le support 24 se présente sous la forme d'une traverse qui déborde radialement du couvercle 4 et se prolonge extérieurement au couvercle par des bords tombants destinés à coopérer avec la cuve 3, par exemple avec des conformations portées par des poignées 30, 31 solidaires de la cuve, pour empêcher la rotation relative du support 24 et de la cuve 3 selon un axe vertical central. Afin de commander la rotation du couvercle 4 relativement au support 24 et à la cuve 3, et donc le verrouillage/déverrouillage du couvercle 4 relativement à la cuve 3, l'appareil 2 est avantageusement pourvue d'une poignée de commande 25, par exemple en forme d'anse, montée à rotation relativement au support 24 selon un axe de rotation sensiblement perpendiculaire à l'axe vertical central. Le pivotement de cette poignée 25 permet ainsi, grâce à un dispositif de transformation de mouvement, d'impartir au couvercle 41 un mouvement de rotation relativement au support 24.

De préférence, l'appareil 2 comprend en outre, comme évoquée précédemment, un capteur de température 12, qui fait avantageusement partie d'un module indépendant 26 destiné être attaché de manière permanente ou amovible, par exemple au moyen d'une liaison magnétique, à l'appareil 2, et de préférence au support 24 comme illustré aux figures 16, 17. À cette fin, le module 26 en question comporte par exemple un talon 26A magnétique destiné à coopérer avec une embase 27 solidaire du support 24. Le capteur de température 12 est conçu pour pouvoir se trouver sur la trajectoire d'échappement de la vapeur issue de la soupape 1, pour déterminer la température de vapeur à la sortie de l'appareil 1, ou pour déterminer à tout le moins l'accroissement de température lié à l'afflux de vapeur susceptible de provenir de la soupape 1. De préférence, le capteur de température 12 est conçu pour pouvoir également se trouver, sur commande de l'utilisateur, en dehors de la trajectoire d'échappement de la vapeur impartie par le conduit 10, par exemple pour faciliter la séparation manuelle des sous-ensembles inférieur (figure 10) et supérieur (figure 11) formant la soupape 1. Dans ce mode de réalisation particulièrement avantageux, l'invention met ainsi en oeuvre un capteur de température 12 et une soupape 1 totalement indépendants l'un de l'autre et qui peuvent évoluer entre deux positions relatives, savoir une position fonctionnelle (figure 17) dans laquelle le capteur de température 12 se trouve sur la trajectoire d'échappement de la vapeur impartie par le conduit 10, et une position inactive dans laquelle le capteur de température 12 est décalé angulairement par rapport à la soupape 1 dans un plan horizontal perpendiculaire à la direction axiale X-X'. Dans ce cas, illustrée à la figure 16, le capteur 12 est maintenu à une distance L de la soupape 1, et ne se trouve donc plus au droit de cette dernière dans le flux de vapeur dirigée vers le haut par le conduit 10. Avantageusement, lesdits support 24 et couvercle 4 embarquent respectivement l'un (quelconque) ou l'autre desdits capteur de température 12 et soupape 1 pour que lorsque le sous-ensemble de couvercle est en configuration de verrouillage, le capteur de température 12 se trouve sensiblement sur la trajectoire d'échappement impartie à la vapeur par le conduit 10, et pour que lorsque ledit sous-ensemble de couvercle est en configuration de déverrouillage, ledit capteur de température 12 se trouve sensiblement en dehors de ladite trajectoire d'échappement.

La mesure de température opérée par le capteur 12 peut être extrêmement précise et répétable, grâce en particulier au fait que la géométrie extérieure (et en particulier la hauteur) de la soupape 1 reste constante en permanence, quel que soit l'état (régulation de pression, décompression...) de la soupape 1. En particulier, grâce à la conception spécifique exposée dans ce qui précède, le sommet de la soupape 1 (matérialisé en l'espèce par la sortie 10) peut conserver une altitude constante par rapport à la position du capteur de température 12, quelle que soit la position du sélecteur formant l'organe de commande 11.

La soupape 1 est en outre de conception extrêmement simple et bon marché, tout en étant particulièrement confortable d'utilisation et démontable en deux sous-ensembles (illustrés respectivement aux figures 10 et 11), ce qui en facilite le nettoyage.

### POSSIBILITE D'APPLICATION INDUSTRIELLE

L'invention trouve son application industrielle dans la conception, la fabrication et l'utilisation d'appareils de cuisson d'aliments et de soupapes destinées à équiper de tels appareils.

## Revendications

1. Soupape (1) de régulation de pression destinée à équiper un appareil (2) de cuisson d'aliments sous pression de vapeur, ladite soupape (1) comprenant :
- un corps inférieur (5) pourvu d'un siège (6) destiné à mettre en communication l'intérieur de l'appareil (2) avec l'extérieur,
- un obturateur (7) mobile en translation selon une direction axiale (X-X') et coopérant avec le siège (6), sous l'influence conjointe d'un premier organe de rappel (8) et du niveau de pression régnant dans l'appareil, pour maintenir ce dernier à un niveau de consigne,
- un corps supérieur (9) qui forme un conduit (10) pour canaliser la vapeur (V) s'échappant par le siège (6), ledit conduit (10) se terminant par une sortie (10A) par laquelle ladite vapeur (V) s'échappe hors de la soupape (1),
- et un organe de commande (11) de la décompression, conçu pour être déplacé manuellement relativement au corps inférieur (5) pour amener l'obturateur (7) à occuper une position de décompression permettant une fuite de vapeur par le siège (6),
ladite soupape (1) étant **caractérisée en ce qu'**elle comprend un premier mécanisme de transformation conçu pour transformer le déplacement de l'organe de commande (11) relativement au corps inférieur (5) en rotation du corps supérieur (9) relativement au corps inférieur (5), et un deuxième mécanisme de transformation conçu pour transformer la rotation du corps supérieur (9) en déplacement de l'obturateur (7) relativement au corps inférieur (5), lesdits premier et deuxième mécanismes de transformation étant conçus pour maintenir ladite sortie (10A) à distance (D) constante du corps inférieur (5) selon la direction axiale (X-X').

2. Soupape (1) selon la revendication 1 **caractérisée en ce que** ledit organe de commande (11) est monté à rotation relativement audit corps inférieur (5) selon un premier axe de rotation parallèle à ladite direction axiale (X-X').

3. Soupape (1) selon la revendication 1 ou 2 **caractérisée en ce que** ledit corps supérieur (9) est monté à rotation selon un deuxième axe de rotation parallèle à ladite direction axiale (X-X').

4. Soupape (1) selon les revendications 2 et 3 **caractérisée en ce que** lesdits premier et deuxième axes de rotation sont confondus.

5. Soupape (1) selon la revendication 4 **caractérisée en ce que** lesdits premier axe, deuxième axe, siège (6) et conduit (10) sont coaxiaux.

6. Soupape (1) selon l'une des revendications 1 à 5 **caractérisée en ce que** ledit corps inférieur (5) comprend un élément tubulaire (60) formant le siège (6) ainsi qu'un bâti (50) attaché audit élément tubulaire (60) de façon à former une jupe entourant au moins localement ce dernier.

7. Soupape (1) selon l'une des revendications 1 à 6 **caractérisée en ce que** ledit obturateur (7) comprend un manchon (70) enfilé au moins en partie sur ledit siège (6) de façon à pouvoir coulisser le long dudit siège (6), ledit manchon (70) portant un clapet (71) destiné à coopérer avec le siège (6) pour contrôler l'ouverture/fermeture de ce dernier.

8. Soupape (1) selon l'une des revendications 1 à 7 **caractérisée en ce que** ledit premier organe de rappel (8) comprend un corps élastique interposé entre l'obturateur (7) et le corps supérieur (9), de façon à exercer sur l'obturateur (7) une force de rappel maintenant l'obturateur (7) dans une position basse d'obturation du siège (6).

9. Soupape (1) selon la revendication 8 **caractérisée en ce que** ledit corps élastique comprend un ressort de compression disposé coaxialement audit siège (6).

10. Soupape selon les revendications 7 et 9 **caractérisée en ce que** ledit ressort de compression est enfilé sur ledit manchon (70), ce dernier s'étendant longitudinalement entre une extrémité supérieure (70A) qui porte ledit clapet et une extrémité inférieure (70B) conformée pour servir de butée pour ledit ressort de compression.

11. Soupape (1) selon l'une des revendications 1 à 10 **caractérisée en ce que** ledit organe de commande (11) comprend une bague (11A) entourant au moins localement ledit siège (6), ainsi qu'une patte de manipulation (11B) qui fait saillie radialement de ladite bague (11A).

12. Soupape (1) selon les revendications 4, 7 et 11 **caractérisée en ce que** ladite bague (11A) est enfilée sur ledit corps supérieur (9) de façon à entourer localement ce dernier, ledit premier mécanisme de transformation comprenant au moins des éléments mâle et femelle issus respectivement de la bague (11A) et du corps supérieur (9) ou inversement, lesdits éléments mâle et femelle coopérant pour que la rotation de la bague (11A) selon le premier axe de rotation entraîne la rotation du corps supérieur (9) selon ledit deuxième axe de rotation.

13. Soupape (1) selon l'une des revendications 1 à 12 **caractérisée en ce que** ledit deuxième mécanisme de transformation comprend une liaison glissière entre le corps supérieur (9) et l'obturateur (7), de façon à permettre l'entraînement en rotation de l'obturateur (7) par le corps supérieur (9) tout en autorisant le coulissement de l'obturateur (7) relativement au corps supérieur (9).

14. Soupape (1) selon l'une des revendications 1 à 13 **caractérisée en ce que** ledit deuxième mécanisme de transformation comprend une came (21) solidaire du corps inférieur (5) et un suiveur de came (22) solidaire de l'obturateur et coopérant avec la came (21) pour transformer la rotation de l'obturateur (7) relativement au corps inférieur (5) en coulissement de l'obturateur (7) selon la direction axiale (X-X').

15. Appareil (2) de cuisson d'aliments sous pression de vapeur équipé d'une soupape selon l'une des revendications 1 à 14.

## Patentansprüche

1. Druckregelventil (1), das dazu bestimmt ist, in ein Gerät (2) zum Kochen von Speisen unter Dampfdruck eingebaut zu werden, wobei das Ventil (1) aufweist:
- einen unteren Körper (5), der mit einem Sitz (6) versehen ist, der dazu bestimmt ist, das Innere des Gerätes (2) mit dem Äußeren in Verbindung zu setzen,
- einen Verschluss (7), der in axialer Richtung (X-X') translatorisch bewegbar ist und mit dem Sitz (6) unter dem gemeinsamen Einfluss eines ersten Rückstellelements (8) und des Druckniveaus, das in dem Gerät vorherrscht, zusammenwirkt, um dieses Letztere auf einem Sollniveau zu halten,
- einen oberen Körper (9), der eine Leitung (10) bildet, um den Dampf (V) zu kanalisieren, der aus dem Sitz (6) entweicht, wobei die Leitung (10) in einem Austritt (10A) endet, durch den der Dampf (V) aus dem Ventil (1) entweicht,
- und ein Element zum Steuern (11) der Druckentlastung, das ausgelegt ist, manuell in Bezug auf den unteren Körper (5) verschoben zu werden, um zu bewirken, dass der Verschluss (7) eine Druckentlastungsposition einnimmt, die einen Dampfaustritt durch den Sitz (6) ermöglicht,
wobei das Ventil (1) **dadurch gekennzeichnet ist, dass** es einen ersten Umwandlungsmechanismus umfasst, der ausgelegt ist, die Verschiebung des Elements zum Steuern (11) in Bezug auf den unteren Körper (5) in eine Drehung des oberen Körpers (9) in Bezug auf den unteren Körper (5) umzuwandeln, und einen zweiten Umwandlungsmechanismus aufweist, der ausgelegt ist, die Drehung des oberen Körpers (9) in eine Verschiebung des Verschlusses (7) in Bezug auf den unteren Körper (5) umzuwandeln, wobei der erste und der zweite Umwandlungsmechanismus ausgelegt sind, um den Austritt (10A) in einem konstanten Abstand (D) zu dem unteren Körper (5) in axialer Richtung (X-X') zu halten.

2. Ventil (1) nach Anspruch 1, **dadurch gekennzeichnet, dass** das Element zum Steuern (11) drehbar in Bezug auf den unteren Körper (5) gemäß einer ersten Drehachse montiert ist, die parallel zu der axialen Richtung (X-X') ist.

3. Ventil (1) nach Anspruch 1 oder 2, **dadurch gekennzeichnet, dass** der obere Körper (9) drehbar gemäß einer zweiten Drehachse montiert ist, die parallel zu der axialen Richtung (X-X') ist.

4. Ventil (1) nach den Ansprüchen 2 und 3, **dadurch gekennzeichnet, dass** die erste und die zweite Drehachse zusammenfallen.

5. Ventil (1) nach Anspruch 4, **dadurch gekennzeichnet, dass** die erste Achse, die zweite Achse, der Sitz (6) und die Leitung (10) koaxial sind.

6. Ventil (1) nach einem der Ansprüche 1 bis 5, **dadurch gekennzeichnet, dass** der untere Körper (5) ein röhrenförmiges Element (60), das den Sitz (6) bildet, und ein Gestell (50) aufweist, das an dem röhrenförmigen Element (60) befestigt ist, um eine Schürze zu bilden, die mindestens lokal dieses Letztere umgibt.

7. Ventil (1) nach einem der Ansprüche 1 bis 6, **dadurch gekennzeichnet, dass** der Verschluss (7) eine Hülse (70) aufweist, die mindestens teilweise auf den Sitz (6) aufgeschoben ist, um entlang des Sitzes (6) zu gleiten, wobei die Hülse (70) ein Klappenventil (71) trägt, das dazu bestimmt ist, mit dem Sitz (6) zusammenzuwirken, um das Öffnen/Schließen dieses Letzteren zu steuern.

8. Ventil (1) nach einem der Ansprüche 1 bis 7, **dadurch gekennzeichnet, dass** das erste Rückstellelement (8) einen elastischen Körper aufweist, der zwischen dem Verschluss (7) und dem oberen Körper (9) angeordnet ist, um auf den Verschluss (7) eine Rückstellkraft auszuüben, die den Verschluss (7) in einer niedrigen Verschlussposition des Sitzes (6) hält.

9. Ventil (1) nach Anspruch 8, **dadurch gekennzeichnet, dass** der elastische Körper eine Druckfeder aufweist, die koaxial zu dem Sitz (6) angeordnet ist.

10. Ventil (1) nach einem der Ansprüche 7 und 9, **dadurch gekennzeichnet, dass** die Druckfeder auf die Hülse (70) aufgeschoben ist, wobei sich diese Letztere in Längsrichtung zwischen einem oberen Ende (70A), das das Klappenventil trägt, und einem unteren Ende (70B), das ausgebildet ist, um als Anschlag für die Druckfeder zu dienen, erstreckt.

11. Ventil (1) nach einem der Ansprüche 1 bis 10, **dadurch gekennzeichnet, dass** das Element zum Steuern (11) einen Ring (11A), der mindestens lokal den Sitz (6) umgibt, und eine Handhabungslasche (11B) aufweist, die radial von dem Ring (11A) vorsteht.

12. Ventil (1) nach den Ansprüchen 4, 7 und 11, **dadurch gekennzeichnet, dass** der Ring (11A) auf den oberen Körper (9) aufgeschoben ist, um lokal diesen Letzteren zu umgeben, wobei der erste Umwandlungsmechanismus mindestens ein männliches und ein weibliches Element aufweist, die jeweils aus dem Ring (11A) und dem oberen Körper (9) oder umgekehrt entstammen, wobei das männliche und weibliche Element zusammenwirken, damit die Drehung des Rings (11A) entlang der ersten Drehachse die Drehung des oberen Körpers (9) entlang der zweiten Drehachse bewirkt.

13. Ventil (1) nach einem der Ansprüche 1 bis 12, **dadurch gekennzeichnet, dass** der zweite Umwandlungsmechanismus eine Gleitverbindung zwischen dem oberen Körper (9) und dem Verschluss (7) aufweist, um das in Rotation Versetzen des Verschlusses (7) durch den oberen Körper (9) zu ermöglichen, indem gleichzeitig das Gleiten des Verschlusses (7) in Bezug auf den oberen Körper (9) ermöglicht wird.

14. Ventil (1) nach einem der Ansprüche 1 bis 13, **dadurch gekennzeichnet, dass** der zweite Umwandlungsmechanismus einen Nocken (21), der mit dem unteren Körper (5) fest verbunden ist, und einen Nockenfolger (22) aufweist, der mit dem Verschluss fest verbunden ist und mit dem Nocken (21) zusammenwirkt, um die Drehung des Verschlusses (7) in Bezug auf den unteren Körper (5) in Gleiten des Verschlusses (7) in axialer Richtung (X-X') umzuwandeln.

15. Gerät (2) zum Kochen von Speisen unter Dampfdruck, das mit einem Ventil nach einem der Ansprüche 1 bis 14 ausgestattet ist.

## Claims

1. A pressure regulator valve (1) designed to equip a utensil (2) for cooking food under steam pressure, said valve (1) comprising:
- a lower body (5) provided with a seat (6) designed to put the inside of the utensil (2) into communication with the outside;
- a closure member (7) that is mounted to move in translation along an axial direction (X-X') and that co-operates with the seat (6), under the joint influence of a first return member (8) and of the level of pressure prevailing in the utensil, to maintain said level of pressure at a setpoint level;
- an upper body (9) that forms a duct (10) for channeling the steam (V) escaping via the seat (6), said duct (10) being terminated by an outlet (10A) via which said steam (V) escapes from the valve (1); and
- a decompression control member (11), designed to be moved manually relative to the lower body (5) to cause the closure member (7) to take up a decompression position allowing steam to leak via the seat (6);
said valve (1) being **characterized in that** it includes a first transformation mechanism designed to transform the movement of the control member (11) relative to the lower body (5) into movement in rotation of the upper body (9) relative to the lower body (5), and a second transformation mechanism designed to transform the movement in rotation of the upper body (9) into movement of the closure member (7) relative to the lower body (5), said first and second transformation mechanisms being designed to maintain said outlet (10A) at a constant distance (D) from the lower body (5) along the axial direction (X-X').

2. A valve (1) according to claim 1, **characterized in that** said control member (11) is mounted to move in rotation relative to said lower body (5) about a first axis of rotation parallel to said axial direction (X-X').

3. A valve (1) according to claim 1 or claim 2, **characterized in that** said upper body (9) is mounted to move in rotation about a second axis of rotation parallel to said axial direction (X-X').

4. A valve (1) according to claims 2 and 3, **characterized in that** said first and second axes of rotation coincide.

5. A valve (1) according to claim 4, **characterized in that** said first axis, second axis, seat (6), and duct (10) are coaxial.

6. A valve (1) according to any one of claims 1 to 5, **characterized in that** said lower body (5) comprises a tubular element (60) forming the seat (6) and a structure (50) attached to said tubular element (60) in such a manner as to form a skirt surrounding said tubular element (60) at least locally.

7. A valve (1) according to any one of claims 1 to 6, **characterized in that** said closure member (7) comprises a sleeve (70) engaged at least in part over said seat (6) in such a manner that it can slide along said seat (6), said sleeve (70) carrying a valve member (71) designed to cooperate with the seat (6) to control opening/closure thereof.

8. A valve (1) according to any one of claims 1 to 7, **characterized in that** said first return member (8) comprises a resilient body interposed between the closure member (7) and the upper body (9), in such a manner as to exert on the closure member (7) a return force maintaining the closure member (7) in a low position in which it closes off the seat (6).

9. A valve (1) according to claim 8, **characterized in that** said resilient body comprises a compression spring disposed coaxially about said seat (6).

10. A valve according to claims 7 and 9, **characterized in that** said compression spring is engaged over said sleeve (70), said sleeve extending longitudinally between an upper end (70A) that carries said valve member and a lower end (70B) shaped to serve as an abutment for said compression spring.

11. A valve (1) according to any one of claims 1 to 10, **characterized in that** said control member (11) comprises a ring (11A) surrounding said seat (6) at least locally, and a manipulation tab (11B) that projects radially from said ring (11A).

12. A valve (1) according to claims 4, 7, and 11, **characterized in that** said ring (11A) is engaged over said upper body (9) in such a manner as to surround said upper body (9) locally, said first transformation mechanism comprising at least male and female elements formed integrally respectively with the ring (11A) and with the upper body (9) or vice versa, said male and female elements co-operating so that the ring (11A) rotating about the first axis of rotation causes the upper body (9) to rotate about said second axis of rotation.

13. A valve (1) according to any one of claims 1 to 12, **characterized in that** said second transformation mechanism comprises a sliding connection between the upper body (9) and the closure member (7), in such a manner as to enable the closure member (7) to be driven in rotation by the upper body (9) while also allowing the closure member (7) to slide relative to the upper body (9).

14. A valve (1) according to any one of claims 1 to 13, **characterized in that** said second transformation mechanism comprises a cam (21) integral with or secured to the lower body (5) and a cam follower (22) integral with or secured to the closure member and co-operating with the cam (21) to transform the rotation of the closure member (7) relative to the lower body (5) into sliding of the closure member (7) along the axial direction (X-X').

15. A utensil (2) for cooking food under steam pressure equipped with a valve according to any one of claims 1 to 14.
